# EUROPÄISCHE PATENTSCHRIFT

(11) **EP 4 052 936 B1**
(45) Veröffentlichungstag und Bekanntmachung des Hinweises auf die Patenterteilung: **01.05.2024**
(21) Anmeldenummer: 22159360.1
(22) Anmeldetag: 01.03.2022
(51) Int. Cl.: B60G 13/00, B60G 13/08, F04B 23/04, F04C 2/10

(54) **GEHÄUSEAUSFÜHRUNG FÜR MPE-ACHSSATZ**
HOUSING DESIGN FOR MPE AXLE SET
MODE DE RÉALISATION DE CARTER POUR UN TRAIN D'ESSIEUX À POINTS D'ENTRÉE MULTIPLES

(30) Priorität: 02.03.2021 DE 102021105032
(43) Veröffentlichungstag der Anmeldung: 07.09.2022
(73) Patentinhaber: RAPA Automotive GmbH & Co. KG, 95100 Selb (DE)
(72) Erfinder: Lauterbach, Frank, 95100 Selb (DE); Maier, Alexandra, 95100 Selb (DE); Schrems, Christian, 95100 Selb (DE); Bähr, Maximilian, 95100 Selb (DE); Wolfrum, Marco, 95100 Selb (DE)
(74) Vertreter: Klunker IP Patentanwälte PartG mbB

(56) Entgegenhaltungen:
- EP-B1- 3 184 819
- DE-A1-102012 204 526
- DE-A1-102019 111 980
- DE-A1-102019 118 384

## Beschreibung

### GEBIET DER ERFINDUNG

Die vorliegende Erfindung betrifft eine Vorrichtung zum Bereitstellen von hydraulischer Energie in einem aktiven Fahrwerk eines Fahrzeugs, eine Fahrwerkachse sowie ein Fahrwerksystem mit einer derartigen Vorrichtung.

### HINTERGRUND DER ERFINDUNG

Aktive Fahrwerksysteme sind prinzipiell bekannt, beispielsweise aus DE 39 02 743 C1 oder DE 2 020 292 A1. Ein aktives Fahrwerk weist hydraulisch steuerbare Stoßdämpfer auf, bei denen die beiden Zylinder- bzw. Dämpferkammern des Arbeitszylinders eines gegebenen Stoßdämpfers nicht lediglich über ein oder mehrere, gegebenenfalls steuerbare Dämpfungs- bzw. Drosselventile miteinander verbunden sind, sondern bei denen der Füllzustand der Zylinderkammern aktiv gesteuert werden kann und entsprechend bedarfsweise hydraulische Kräfte in das Fahrwerk eingeleitet werden können. Die beiden Zylinderkammern eines Stoßdämpfers können beispielsweise über eine hydraulische Pumpe miteinander verbunden sein.

Dadurch kann durch Pumpen von Hydraulikfluid beispielsweise Nick- und/oder Wankbewegungen des Fahrzeugs entgegengewirkt werden. Umgekehrt kann eine solche Anordnung aus Stoßdämpfer, hydraulischer Pumpe und Elektromotor prinzipiell auch dazu genutzt werden, durch Rekuperation gewonnene elektrische Energie in das Bordnetz des Fahrzeugs zurück zu speisen. Weiterhin können auch bei Verwendung der Pumpe unterschiedliche Dämpfungsverhalten eingestellt werden, beispielsweise "weich" oder "hart" oder auch abhängig vom Fahrverhalten und/oder der Untergrundbeschaffenheit.

Zur Steuerung des Elektromotors einer gegebenen hydraulischen Pumpe ist dabei üblicherweise eine entsprechende Ansteuereinheit vorgesehen, wodurch eine so genannte Motor-Pumpe-Einheit geschaffen wird, die eine Pumpe, einen Elektromotor und eine Ansteuereinheit (ECU, Electric Control Unit) aufweist und häufig als bauliche Einheit ausgebildet ist. Es ist bekannt, für jeden zu steuernden Stoßdämpfer genau eine Motor-Pumpe-Einheit (MPE) vorzusehen. Dabei kann die entsprechende Motor-Pumpe-Einheit unmittelbar an oder zumindest nahe an dem jeweiligen Stoßdämpfer montiert sein. Aus Bauraumgründen ist dies jedoch nicht immer möglich, so dass die entsprechende Motor-Pumpe-Einheit gegebenenfalls entfernt vom Stoßdämpfer im Fahrzeug platziert werden muss. Dabei muss auf die korrekte Verbindung der hydraulischen Schläuche und der elektrischen Verkabelung geachtet werden. Aus der EP 3 736 146 A1 und der EP 3 764 522 A1 sind auch so genannte MPE-Achssätze bekannt, die als vormontierte, bauliche Einheit jeweils zwei Pumpen und zwei Elektromotoren bzw. zwei Motor-Pumpe-Gruppen, in denen jeweils eine Pumpe und ein Elektromotor eine bauliche Einheit bilden, umfassen, die dann jeweils einem der beiden Stoßdämpfern einer Fahrzeugachse zugeordnet sind. Dabei werden die beiden Stoßdämpfer unabhängig voneinander gesteuert bzw. betrieben. Während das Dokument EP 3 764 522 A1 eine Vorrichtung entsprechend dem Oberbegriff des Anspruchs 1 offenbart, beschreibt das Dokument DE 10 2012 204 526 A1 die Verwendung eines Dichtklebers bei einem Hydraulikaggregat.

### ZUSAMMENFASSUNG DER ERFINDUNG

Derartige Achssätze werden beispielsweise in einem geschlossen, dichten Gesamtgehäuse angeordnet, das einerseits dicht gegenüber Verschmutzungen und anderen Umwelteinflüssen ist, beispielsweise luftdicht, wasserdicht oder spritzwasserdicht, womit die Achssätze an einer Fahrzeugunterseite verbaut werden können. Das Gesamtgehäuse sollte andererseits auch dicht bzw. abschirmend gegenüber elektromagnetischer Strahlung sein, die beispielsweise aufgrund von hohen Wechselströmen im Achssatz generiert wird, um die EMV-Belastung gering zu halten bzw. zu reduzieren. Dadurch ergeben sich jedoch häufig Beschränkungen in der Ausgestaltung der Gehäuseteile des Gesamtgehäuses, die zu einer schlechten Zugänglichkeit von in den Teilgehäusen verbauten Baugruppen und zu einer erschwerten Montage führen.

Aufgabe der Erfindung ist es, eine Vorrichtung zum Bereitstellen von hydraulischer Energie in einem aktiven Fahrwerksystem eines Fahrzeugs zu schaffen, dessen Teilgehäuse zugleich eine hohe Dichtigkeit des Gesamtgehäuses wie auch eine gute Zugänglichkeit zu den darin verbauten Baugruppen gewährleistet.Es ist weiterhin Aufgabe der vorliegenden Erfindung eine entsprechenden Fahrwerkachse und ein entsprechendes Fahrwerksystem anzugeben.

Die Aufgabe wird gelöst durch eine Vorrichtung mit den Merkmalen der unabhängigen Ansprüche. Bevorzugte Ausgestaltungen und Weiterbildungen sind in den davon abhängigen Ansprüchen angegeben.

Eine erfindungsgemäße Vorrichtung zum Bereitstellen von hydraulischer Energie in einem Fahrwerksystem eines Fahrzeugs umfasst wenigstens die folgenden drei Baugruppen oder besteht genau daraus:
- eine erste Motor-Pumpe-Gruppe, umfassend oder bestehend aus einer ersten hydraulischen Pumpe und einem ersten Elektromotor zum Antreiben der ersten hydraulischen Pumpe,
- eine zweite Motor-Pumpe-Gruppe, umfassend oder bestehend aus einer zweiten hydraulischen Pumpe und einem zweiten Elektromotor zum Antreiben der zweiten hydraulischen Pumpe, und
- wenigstens oder genau eine Elektronikeinheit zum elektrischen Ansteuern und Antreiben der ersten und den zweiten Motor-Pumpe-Gruppe.

Dabei sind die erste und die zweite Motor-Pumpe-Gruppe (gegebenenfalls sämtliche Motor-Pumpe-Gruppen) vorzugsweise baugleich bzw. identisch und/oder spiegelsymmetrisch ausgestaltet. Die erfindungsgemäße Vorrichtung wird im Folgenden auch als Achssatz bezeichnet, was jedoch nicht einschränkend zu verstehen ist.

Im montierten bzw. betriebsbereiten Zustand der erfindungsgemäßen Vorrichtung bzw. des erfindungsgemäßen Achssatzes sind die wenigstens drei bzw. sämtliche Baugruppen, also zumindest die beiden Motor-Pumpe-Gruppen und die Elektronikeinheit, vollständig innerhalb, das heißt im Innenraum bzw. auf der Innenseite eines gemeinsamen, geschlossenen und abgedichteten Gesamtgehäuses angeordnet.

Dieses Gesamtgehäuse ist aus einer Vielzahl von Teilgehäusen, wenigstens aus drei Teilgehäusen, aufgebaut. Es wird durch das Aneinanderfügen dieser Vielzahl von Teilgehäusen geschlossen bzw. geschaffen, wodurch ein geschlossener (vollständig abgeschlossener) Innenraum des Gesamtgehäuses entsteht, der dann abgedichtet wird. Entsprechend sind im montierten Zustand des Achssatzes, das heißt im geschlossenen Gesamtgehäuse, sämtliche Teilgehäuse aneinander gefügt und vorzugsweise sind sämtliche Teilgehäuse jeweils wechselseitig unmittelbar miteinander fest verbunden. Die Teilgehäuse dienen bevorzugt als Träger für genau eine oder auch mehrere Baugruppen. Im einfachsten Fall ist jede Baugruppen jeweils in bzw. auf genau einem Teilgehäuse angeordnet und/oder fest verbaut, und insbesondere eingebettet derart, dass die jeweilige Baugruppe vollständig oder im Wesentlichen in einem von dem Teilgehäuse aufgespannten Innenraum angeordnet ist. Weiterhin besteht im einfachsten Fall das Gesamtgehäuse aus genau (diesen) drei Teilgehäusen.

Dabei weisen die wenigstens drei wechselseitig jeweils aneinandergrenzenden Teilgehäuse bzw. sämtliche Teilgehäuse bevorzugt jeweils eine vollständig einstückige Außenfläche (das heißt die außenliegende Fläche eines gegebenen Teilgehäuses besteht durchgängig aus demselben Material) oder eine zumindest einteilige Außenfläche auf (das heißt mehrere Teilgehäuse-Abschnitte, die die außenliegende Fläche bilden, werden bei bestimmungsgemäßer Verwendung bzw. Handhabung des jeweiligen Teilgehäuses nicht getrennt oder geteilt und/oder sind fest und dicht bzw. untrennbar miteinander verbunden). Die Teilgehäuse weisen somit eine vollständig und durchgängig geschlossene und dichte Außenfläche auf.

Im einfachsten Fall ist die Außenfläche eines Teilgehäuses identisch mit dessen Außenseite. In der Außenfläche der Teilgehäuse können jedoch eine oder mehrere Ausnehmungen bzw. Durchbrechungen vorgesehen sein, etwa als Durchführungen von Leitungen und Kabel oder als Schraubenlöcher, die dann abgedichtet und/oder gegebenenfalls mit Deckel geschlossen und/oder beispielsweise ausschließlich entfernt vom Rand angeordnet sind, so dass sich - auch im Falle etwaiger Durchführungen - eine vollständig geschlossene und dichte Außenseite des jeweiligen Teilgehäuses ergibt. Ist eine derartige Ausnehmung bzw. Durchbrechung an einem Rand der Außenfläche des Teilgehäuses angeordnet (etwa an einer der nachfolgend beschriebenen Gehäusetrennlinien), so wird sie im Zusammenspiel mit einem unmittelbar angrenzenden Teilgehäuse, das heißt im Gesamtgehäuse, abgedichtet und/oder geschlossen. Die Außenseite der Teilgehäuse bildet nach dem Zusammenfügen der Teilgehäuse bzw. dem Ausbilden des geschlossenen Gesamtgehäuses zugleich die bzw. den jeweiligen Teil der Außenseite des Gesamtgehäuses.

Erfindungsgemäß sind dabei genau oder wenigstens drei Teilgehäuse der Vielzahl von Teilgehäusen im Gesamtgehäuse jeweils wechselseitig aneinandergrenzend ausgebildet, so dass diese drei Teilgehäuse an wenigstens einem Punkt auf der Außenseite des Gesamtgehäuses unmittelbar aneinandergrenzen, im einfachsten Fall unmittelbar aneinander stoßen. Dieser wenigstens eine Punkt wird im Folgenden als Verzweigungspunkt bezeichnet, da die Linien auf der Außenseite des Gesamtgehäuses, entlang denen diese wenigstens drei Teilgehäuse aneinander grenzen (im Folgenden als Gehäusetrennlinien bezeichnet), an einem derartigen Verzweigungspunkt zusammenlaufen bzw. sich verzweigen, vorzugsweise unter einem rechten Winkel, was dann auch als T-Stoß bezeichnet wird. Bevorzugt ist an den (sämtlichen) Verzweigungspunkten kein von den dort aneinander grenzenden Teilgehäusen verschiedenes Dichtbauteil, insbesondere kein weiteres Bauteil, vorgesehen und grenzen bzw. stoßen dort bevorzugt genau drei Teilgehäuse aneinander. Dabei bilden, auch im Hinblick auf das Vorhandensein derartiger Verzweigungspunkte, die Gehäusetrennlinien zwischen den wenigstens drei jeweils wechselseitig aneinandergrenzenden Teilgehäusen auf dem Gesamtgehäuse geschlossene Wege bzw. Trajektorien, so dass auf der Außenseite des Gesamtgehäuses in der Regel eine gerade Anzahl von Verzweigungspunkten, beispielsweise genau zwei, vier, etc. Verzweigungspunkte, vorliegen.

Eine derartige Anordnung von Teilgehäusen, die beispielsweise als Träger der Baugruppen dienen, schafft mehr Freiheitsgrade bei deren geometrischer Ausgestaltung, insbesondere hinsichtlich der Ausgestaltung deren Außenseiten und/oder deren Öffnungen zum Innenraum des Gesamtgehäuses hin. Diese können dann als ein großer, durchgehender Bereich ausgebildet werden, wodurch sich die resultierende Zugänglichkeit zu den verbauten Baugruppen erhöht.

Allerdings lassen sich die durch die wenigstens drei jeweils wechselseitig aneinandergrenzenden Teilgehäuse entstehenden Gehäusetrennlinien, vor allem wegen der Verzweigungspunkte, mit Hilfe von (an den Gehäusetrennlinien) einzulegenden, vorgeformten, selbsttragenden und/oder gegebenenfalls elastomeren Dichtungen (im Folgenden als Bauteildichtungen bezeichnet) - zumindest maschinell - kaum verlässlich abdichten. Daher werden zumindest oder genau die zwischen den wenigstens drei jeweils wechselseitig aneinandergrenzenden Teilgehäusen liegenden Gehäusetrennlinien erfindungsgemäß, insbesondere vollständig und ausschließlich, mit einem Dichtklebstoff bzw. Dichtwerkstoff verschlossen und somit die Baugruppen gegenüber Umwelteinflüssen (wie Schmutz, Wasser, Salzwasser, Spritzwasser, etc.) luft-, wasser- und/oder spritzwasserdicht abgedichtet.

Der Dichtklebstoff ist dabei durchgängig bzw. ohne Unterbrechungen entlang der gesamten, zwischen den wenigstens drei jeweils wechselseitig aneinandergrenzenden Teilgehäusen liegenden Gehäusetrennlinien vorgesehen bzw. aufgetragen. Dies hat den Vorteil, dass auch die eine erhöhte Zugänglichkeit gestattenden, wenigstens drei jeweils wechselseitig aneinandergrenzenden Teilgehäuse maschinell verlässlich abgedichtet werden können. Zudem kann der Dichtklebstoff im Reparatur- oder Servicefall einfach aufgeschnitten und beim nachfolgenden Zusammenfügen der Teilgehäuse zum Gesamtgehäuse erneut - auch maschinell - aufgetragen werden. Entsprechend kann auf Bauteildichtungen verzichtet werden. Mit anderen Worten werden bevorzugt zumindest oder genau bzw. nur die zwischen den wenigstens drei jeweils wechselseitig aneinandergrenzenden Teilgehäusen liegenden Gehäusetrennlinien ausschließlich mit einem Dichtklebstoff abgedichtet.

Dabei ist der Dichtklebstoff, der beim Auftragen in der Regel flüssig oder zähflüssig ist, bevorzugt dauerelastisch, das heißt er bleibt auch nach dem Trocknen bzw. Aushärten (beispielsweise durch UV-Bestrahlung) verformbar bzw. elastisch. Bevorzugt ist der Dichtklebstoff zumindest in einem Temperaturbereich von -50°C bis 100°C beständig bzw. als Dichtmittel für die Zwecke eines Achssatzes verwendbar. Als Dichtklebstoff wird beispielsweise ein Werkstoff auf Silikonbasis wie Sikasil AS-785 der Firma SIKA verwendet (Sikasil AS-785 A+B - Product Data Sheet Version 3 (01/2014)).

Wie bereits erwähnt besteht das Gesamtgehäuse im einfachsten Fall aus genau drei Teilgehäusen, die dann jeweils wechselseitig aneinander stoßen. An einem, mehreren oder allen der genau oder den wenigstens drei jeweils wechselseitig aneinandergrenzenden Teilgehäusen können jedoch auch ein oder mehrere weitere Teilgehäuse unmittelbar oder mittelbar angeordnet sein, die dann beispielsweise alle oder nur zu einem Teil beispielsweise ohne Dichtklebstoff an dem jeweiligen Teilgehäuse dichtend angebracht sind, beispielsweise über einen ebenen und/oder kreisrunden Flansch angeflanscht und/oder unter Verwendung einer darin einzulegenden und/oder selbsttragenden Bauteildichtung, beispielsweise eines Elastomerbauteils, wie eines O-Rings. Ein Beispiel für derartige weitere Teilgehäuse sind beispielsweise die in den Ausführungsbeispielen beschriebenen Pumpendeckel.

Die erfindungsgemäße Vorrichtung dient zum Bereitstellen von hydraulischer Energie in einem Fahrwerksystem, beispielsweise in Stoßdämpfern. Dabei ist bevorzugt vorgesehen, dass von den Pumpen derartige Aktuatoren direkt und unmittelbar hydraulisch angetrieben werden, so dass besonders bevorzugt die Stellung der Aktuatoren ausschließlich durch die Pumpe bestimmt wird. Beispielsweise weist ein Aktuator zwei von einem Arbeitskolben getrennte Druckkammern aus, die dann (ausschließlich) über die Pumpe verbunden sind. Dadurch entsteht ein geschlossenes hydraulisches System, insbesondere ohne eine drucklosen Tank, in welchem entsprechend eine feste Beziehung zwischen der Stellung der Pumpe und der Stellung des Aktuators besteht.

Das Gesamtgehäuse weist bevorzugt eine quaderförmige oder im Wesentlichen quaderförmige Außenfläche bzw. Außenform auf. Weiterhin verlaufen bevorzugt die Gehäusetrennlinien, an denen die wenigstens drei wechselseitig jeweils aneinandergrenzenden Teilgehäuse aneinandergrenzen oder -stoßen, nicht entlang von Kanten (etwa konvexen Außenkanten) des Gesamtgehäuses und bilden - auch nicht abschnittsweise - eine Außenkante. Diese Gehäusetrennlinien schneiden entsprechend sämtliche Außenkanten des Gesamtgehäuses unter einem von Null verschiedenen Winkel, beispielsweise unter mindestens 30, 45 oder 60 Grad, bevorzugt unter 90 Grad, also senkrecht. Dies begünstigt das Abdichten und die Haltbarkeit des Dichtklebstoffs.

Die wenigstens drei jeweils wechselseitig aneinandergrenzenden Teilgehäuse weisen korrespondierende Eingriffsbereiche, bevorzugt Stoßkanten, auf, an denen und/oder entlang derer diese wenigstens drei jeweils wechselseitig aneinandergrenzenden Teilgehäuse im Gesamtgehäuse, bevorzugt durchgängig bzw. ohne Unterbrechung, miteinander in mechanischem Eingriff stehen, bevorzugt in direktem, unmittelbarem mechanischen Kontakt. Diese Eingriffsbereiche bzw. Stoßkanten bilden im geschlossenen Gesamtgehäuse dann die Gehäusetrennlinien.

Diese (längsgestreckten) Eingriffsbereiche verlaufen, bevorzugt durchgängig, das heißt unterbrechungsfrei, in der Nähe des Rands und/oder bilden den Rand des jeweiligen Teilgehäuses und/oder bilden einen geschlossenen Weg bzw. eine geschlossene Trajektorie in bzw. auf dem Teilgehäuse. Die Eingriffsbereiche bilden entsprechend Trennlinien, die im Gesamtgehäuse und/oder an den jeweiligen Teilgehäusen die Gehäuse-Innenseite von der Gehäuse-Außenseite bzw. den Innenraum von dem Außenraum trennen.

Bevorzugt sind die Eingriffsbereiche als Stoßflächen bzw. Stoßkanten ausgebildet, die sich im geschlossenen Gesamtgehäuse gegenüberliegen und durchgängig aneinander anstoßen. Bevorzugt handelt es sich bei den Stoßkanten um die von dem jeweiligen Teilgehäuse abgewandten, distalen bzw. randseitigen Stirnseiten bzw. Vorderkanten des jeweiligen Teilgehäuses (distale Stoßkanten). Sie sind bevorzugt nicht abgeschrägt und bilden beispielsweise einen rechten Winkel mit der an der Stoßkante angrenzenden bzw. endenden Oberfläche der Teilgehäuse-Innenseite und/oder -Außenseite.

Dabei sind im einfachsten Fall die korrespondierenden Eingriffsbereiche sämtlicher miteinander jeweils wechselseitig in Eingriff stehender Teilgehäuse durchgängig als derartige distale Stoßkanten ausgebildet, so dass sich die jeweils wechselseitig aneinandergrenzenden Teilgehäuse an den Eingriffsbereichen nicht überlappen oder anderweitig ineinander verschachtelt sind. Entsprechend liegen in diesem Fall die Vorderkanten der aneinandergrenzenden Teilgehäuse entlang der zwischenliegenden Gehäusetrennlinie durchgängig stumpf bzw. Stoß auf Stoß aneinander, so dass die Stirnseiten am Rand der Teilgehäuse durchgängige Stoßflächen bzw. Stoßkanten bilden.

Alternativ können die Eingriffsbereiche jeweils wechselseitig miteinander in Eingriff stehender Teilgehäuse durchgängig oder abschnittsweise überlappen, etwas als Nut und Feder.

Weiterhin sind die Eingriffsbereiche bzw. Stoßkanten zumindest in Längsrichtung, in der Regel entlang/in Richtung des Gehäuserands, bevorzugt glatt, eben und/oder geradlinig ausgebildet, so dass aneinandergrenzende Teilgehäuse beim Aneinanderfügen der wenigstens drei jeweils wechselseitig aneinandergrenzenden Teilgehäuse relativ zu einander verschieblich sind und sich ausrichten können, bevorzugt entlang bzw. durch Gleiten auf den Eingriffsbereichen bzw. distalen Stoßkanten. Bevorzugt liegen in einem gegebenen Teilgehäuse der wenigstens drei jeweils wechselseitig aneinandergrenzenden Teilgehäuse sämtliche Eingriffsbereiche bzw. Stoßkanten des Teilgehäuses, die an genau ein gegebenes weiteres Teilgehäuse der wenigstens drei jeweils wechselseitig aneinandergrenzenden Teilgehäuse grenzen, in genau einer Ebene (die nachfolgend auch als Schnittebene bezeichnet wird).

Bevorzugt sind sämtliche korrespondierende Eingriffsbereiche bzw. Stoßkanten der wenigstens drei jeweils wechselseitig aneinandergrenzenden Teilgehäuse durchgängig wie oben beschrieben ausgebildet.

In den wenigstens drei jeweils wechselseitig aneinandergrenzenden Teilgehäusen liegen bevorzugt jeweils sämtliche korrespondierende Eingriffsbereiche bzw. Stoßkanten eines gegebenen Teilgehäuses in genau einer Ebene oder in genau zwei oder genau drei Ebenen. Entsprechend liegen auch sämtliche Gehäusetrennlinien in diesen Ebenen, so dass sie Schnittebenen für das geschlossene Gesamtgehäuse darstellen. Dabei schneiden sich diese Ebenen bzw. Schnittebenen (bevorzugt am Rand des jeweiligen Teilgehäuses) und stehen bevorzugt an den Schnittlinien, an denen sie sich schneiden, jeweils senkrecht aufeinander. Im Fall von beispielsweise genau zwei derartigen Schnittebenen ergeben sich im Teilgehäuse somit zwei aneinander liegende Seiten des Teilgehäuses, die zum Innenraum (sowohl des Gesamtgehäuses wie auch des Teilgehäuses) durchgängig bzw. vollständig offen sind. Dadurch ergibt sich insbesondere an der Schnittlinie dieser beiden Schnittebenen eine gute bzw. leichte Zugänglichkeit zum Innenraum des Teilgehäuses.

Bevorzugt weisen die bzw. weist jedes Teilgehäuse genau eine (durchgehende) Außenfläche auf, die sich durchgehend beispielsweise über verschiedene, aneinander liegende Seiten des jeweiligen Teilgehäuses erstreckt. Entsprechend ist die Außenfläche eines Teilgehäuses bevorzugt nicht durch Eingriffsbereiche bzw. Stoßkanten in zwei oder mehr Flächenabschnitte geteilt bzw. getrennt. In diesem Fall bilden dann sämtliche Eingriffsbereiche bzw. Stoßkanten eines gegebenen Teilgehäuses der wenigstens drei jeweils wechselseitig aneinandergrenzenden Teilgehäuse genau einen geschlossenen Weg bzw. eine geschlossene Trajektorie, der/die in genau einer oder in mehreren Ebenen bzw. Schnittebenen verläuft.

Bevorzugt weisen, wie bereits erwähnt, die wenigstens drei jeweils wechselseitig aneinandergrenzenden Teilgehäuse bzw. sämtliche Teilgehäuse der erfindungsgemäßen Vorrichtung eine einstückige oder einteilige und/oder dichte bzw. geschlossene Außenfläche bzw. Außenseite auf. Entsprechend ist die Außenseite bzw. Außenfläche der einzelnen Teilgehäuse dicht bzw. undurchlässig gegenüber Verschmutzungen und anderen Umwelteinflüssen und ist insbesondere luft-, wasser- und/oder spritzwasserdicht bzw. undurchlässig. Insbesondere sind korrespondierende Eingriffsbereiche bzw. Stoßkanten der wenigstens drei jeweils wechselseitig aneinandergrenzenden Teilgehäuse bevorzugt durchgängig aus einem Material, das heißt durchgängig einstückig, und somit ohne Materialübergang, ausgebildet.

Weiterhin sind bevorzugt die wenigstens drei jeweils wechselseitig aneinandergrenzenden Teilgehäuse bzw. sämtliche Teilgehäuse der erfindungsgemäßen Vorrichtung elektrisch leitend ausgestaltet und umfassen ein oder mehrere elektrisch leitende Materialien oder bestehen (vollständig) daraus. Das elektrisch leitende Material ist dabei bevorzugt eine Metalllegierung, ein Metall, Aluminium, Aluminium-Guss oder Aluminium-Druckguss. Mit Vorteil sind im Gesamtgehäuse die Grenzen bzw. Übergänge zwischen den wenigstens drei jeweils wechselseitig aneinandergrenzenden Teilgehäusen, bevorzugt zwischen sämtlichen Teilgehäusen, die miteinander (unmittelbar) in Eingriff stehen und bevorzugt als Stoßkanten ausgebildet sind, durchgängig elektrisch leitend ausgebildet, so dass sich ein durchgehend elektrisch leitendes Gesamtgehäuse ergibt bzw. eine vollständige und/oder lückenlose (elektromagnetische) Abschirmung für die im Innenraum des Gesamtgehäuses angeordneten Baugruppen. Somit können leicht verschiedene EMV-Anforderungen erfüllt werden. Bevorzugt erfüllt das geschlossene Gesamtgehäuse in dieser Hinsicht die international gültige Norm CISPR 25 (Edition 4.0 2016-10) und/oder die öffentlich zugängliche VW-Norm-Vorgabe TL 81000 zu EMV von Kfz-Elektronikbauteilen (Stand: 2018-03).

In einer bevorzugten Ausgestaltung ist die erste Motor-Pumpe-Gruppe in einem ersten Teilgehäuse der wenigstens drei jeweils wechselseitig aneinandergrenzenden Teilgehäuse, dem so genannten ersten Motor-Pumpe-Gehäuse, angeordnet. Eine Antriebswelle des ersten Elektromotors, zum Antreiben der davon bevorzugt beabstandet angeordneten ersten Pumpe, das heißt eine Antriebswelle mit einer von Null verschiedenen Länge, definiert eine Längsachse der ersten Motor-Pumpe-Gruppe und des ersten Teilgehäuses bzw. des ersten Motor-Pumpe-Gehäuses. Das erste Motor-Pumpe-Gehäuse bzw. dessen Außenseite, das/die bevorzugt einen quaderförmigen Innenraum aufspannt, weist bevorzugt einen U-förmigen oder im Wesentlichen U-förmigen Querschnitt quer bzw. senkrecht zur Antriebswelle bzw. zur Längsachse auf und/oder umgibt die erste Motor-Pumpe-Gruppe an wenigstens oder genau drei Seiten durchgehend bzw. mit einer geschlossenen Fläche. Die Eingriffsbereiche des ersten Motor-Pumpe-Gehäuses verlaufen bevorzugt in genau zwei senkrecht aufeinander stehenden Ebenen bzw. Schnittebenen. Ebenso ist bevorzugt auch die zweite Motor-Pumpe-Gruppe in einem zweiten Teilgehäuse der wenigstens drei jeweils wechselseitig aneinandergrenzenden Teilgehäuse, dem so genannten zweiten Motor-Pumpe-Gehäuse, angeordnet und eine Antriebswelle des zweiten Elektromotors zum Antreiben der zweiten Pumpe definiert eine Längsachse der zweiten Motor-Pumpe-Gruppe und des zweiten Teilgehäuses bzw. des zweiten Motor-Pumpe-Gehäuses, wobei das zweite Motor-Pumpe-Gehäuse bzw. dessen Außenseite, das/die bevorzugt einen quaderförmigen Innenraum aufspannt, einen U-förmigen oder im Wesentlichen U-förmigen Querschnitt quer bzw. senkrecht zur Antriebswelle bzw. zur Längsachse aufweist und/oder die zweite Motor-Pumpe-Gruppe an wenigstens oder genau drei Seiten durchgehend umgibt und/oder wobei die Eingriffsbereiche des zweiten Motor-Pumpe-Gehäuses in genau zwei senkrecht aufeinander stehenden Ebenen bzw. Schnittebenen verlaufen.

Im einfachsten Fall sind die Motor-Pumpe-Gruppen vollständig innerhalb eines von dem jeweiligen Motor-Pumpe-Gehäuse aufgespannten Innenraums angeordnet. Es können jedoch auch unabhängig von den Eingriffsbereichen der Motor-Pumpe-Gehäuse und/oder davon beabstandet, ein oder mehrere weitere Teilgehäuse an den Motor-Pumpe-Gehäusen angeordnet sein, beispielsweise Pumpendeckel, so dass die Motor-Pumpe-Gruppe bevorzugt vollständig innerhalb des sich durch Motor-Pumpe-Gehäuse und Pumpendeckel ergebenden Innenraums angeordnet ist.

Dabei sind die Pumpendeckel bevorzugt ebenfalls auf der Längsachse des Motor-Pumpe-Gehäuses bzw. Motor-Pumpe-Gruppe angeordnet und das Motor-Pumpe-Gehäuse weist auf der Längsachse, bevorzugt auf einer Stirnseite bzw. Querebene des Teilgehäuses, eine bevorzugt in einer Ebene quer zur Längsachse angeordnete, beispielsweise kreisrunde Öffnung mit ebenem Rand auf, durch die die Pumpe ganz oder teilweise über das Motor-Pumpe-Gehäuse hinausragt und durch den wenigstens einen Pumpendeckel abgedeckt und dicht verschlossen wird.

Mit dem bevorzugt U-förmigen Querschnitt des Motor-Pumpe-Gehäuses senkrecht zur Längs-/Antriebsachse, umgibt das Motor-Pumpe-Gehäuse die erste Motor-Pumpe-Gruppe bevorzugt an zumindest oder genau drei Längsseiten mit einer geschlossenen Fläche, besonders bevorzugt entlang der gesamten oder im Wesentlichen entlang der gesamten Länge der Motor-Pumpe-Gruppe.

Dagegen verlaufen die Eingriffsbereiche bzw. Stoßkanten des jeweiligen Motor-Pumpe-Gehäuses bevorzugt in genau zwei aufeinander senkrecht stehenden Ebenen, nämlich einer Längsebene und einer Querebene. Die Längsebene verläuft dabei parallel zu der Antriebswelle bzw. der Längsachse, so dass Eingriffsbereiche dieser Längsebene in einem quaderförmigen Motor-Pumpe-Gehäuse eine U-förmige Öffnung auf der Längsseite des Motor-Pumpe-Gehäuses bilden. Die Querebene verläuft senkrecht zu der Antriebswelle bzw. der Längsachse, so dass Eingriffsbereiche dieser Querebene in einem quaderförmigen Motor-Pumpe-Gehäuse ebenfalls eine U-förmige Öffnung auf der Pumpe-abgewandten Stirnseite des Motor-Pumpe-Gehäuses bilden. Die Eingriffsbereiche der Längs- bzw. Querebene sind zum Eingriff an dem dritten bzw. zweiten Teilgehäuse oder umgekehrt vorgesehen und eingerichtet. Entsprechend steht das Motor-Pumpe-Gehäuse im nicht montierten Zustand dort offen, was eine gute Zugänglichkeit zu der in dem Motor-Pumpe-Gehäuse verbauten Motor-Pumpe-Gruppe, insbesondere zu dem Pumpe-abgewandten Abschnitt, in der Regel der Rückseite des Elektromotors, gestattet. Das Motor-Pumpe-Gehäuse dient daher bevorzugt zugleich als Träger für die Motor-Pumpe-Gruppe.

Dabei sind erstes und zweites Motor-Pumpe-Gehäuse und auch die erste und zweite Motor-Pumpe-Gruppe bevorzugt jeweils baugleich ausgestaltet.

In einer weiteren bevorzugten Ausgestaltung ist die Elektronikeinheit in einem dritten Teilgehäuse, dem so genannten Elektronik-Gehäuse oder Elektronikdeckel, der wenigstens drei jeweils wechselseitig aneinandergrenzenden Teilgehäuse angeordnet und dabei bevorzugt vollständig innerhalb des von dem Elektronik-Gehäuse aufspannten Innenraums angeordnet.

Das Elektronik-Gehäuse spannt bevorzugt einen quaderförmigen Innenraum auf und/oder weist eine quaderförmige Außenform auf und weist besonders bevorzugt einen U-förmigen Querschnitt senkrecht zu zwei der drei Quaderachsen auf. Entsprechend umgibt das Elektronik-Gehäuse die Elektronikeinheit auf fünf Seiten der insgesamt sechs Quaderseiten mit einer geschlossenen Fläche. Mit anderen Worten ist das Elektronik-Gehäuse konkave bzw. wannenförmig ausgebildet, wobei bevorzugt die größte Seite des Quaders die (einzige) Öffnung zum Innenraum des Gesamtgehäuses bildet. Entsprechend liegen sämtliche Eingriffsbereiche des Elektronik-Gehäuses in genau einer einzigen Ebene, wobei bevorzugt alle übrigen der wenigstens drei jeweils wechselseitig aneinandergrenzenden Teilgehäuse dort nebeneinander angeordnet werden.

Bevorzugt ist entlang der bzw. auf den bzw. oberhalb der Gehäusetrennlinien der wenigstens drei jeweils wechselseitig aneinandergrenzenden Teilgehäuse auf der Außenseite des Gesamtgehäuses, bevorzugt durchgängig, eine Vertiefung bzw. eine Außennut zur Aufnahme des Dichtklebstoffs vorgesehen. Entsprechend weisen die wenigstens drei jeweils wechselseitig aneinandergrenzenden Teilgehäuse an den korrespondierenden Eingriffsbereichen bzw. Stoßkanten, im einfachsten Fall zu den Rändern der Teilgehäuse hin, jeweils (durchgängig) eine (randständige) Verjüngung in der Wanddicke bzw. eine Ausnehmnung auf der Außenseite auf, die dann im Gesamtgehäuse diese Außennut schaffen. Im einfachsten Fall weisen die Verjüngungen bzw. Ausnehmungen jeweils die halbe Breite der Außennut auf dem Gesamtgehäuse auf. Eine derartige Außennut begünstigt das Abdichten der Gehäusetrennlinien der wenigstens drei jeweils wechselseitig aneinandergrenzenden Teilgehäuse im Gesamtgehäuse, vermeidet Hervorstehungen des Dichtklebstoffs auf der Außenseite des Gesamtgehäuses und verhindert somit ein ungewolltes Beschädigen des Dichtklebstoffs.

Die Breite der Außennut liegt bevorzugt im Bereich zwischen 1 und 10 mm und beträgt beispielsweise 1, 2, 3, 5, 8 oder 10 mm, wobei jeder der genannten Werte auch eine Ober- oder Untergrenze des genannten Wertebereichs darstellen kann. Die (nicht verjüngte) Wandstärke der Teilgehäuse liegt bevorzugt im Bereich zwischen 2 und 20 mm und beträgt beispielsweise 2, 3, 5, 10, 15 oder 20 mm, wobei jeder der genannten Werte auch eine Ober- oder Untergrenze des genannten Wertebereichs darstellen kann. Die Tiefe der Außennut liegt bevorzugt im im Bereich zwischen 1 und 10 mm und beträgt beispielsweise 1, 2, 3, 5 oder 10 mm, wobei jeder der genannten Werte auch eine Ober- oder Untergrenze des genannten Wertebereichs darstellen kann.

Die bevorzugt gemeinsame Elektronikeinheit ist sowohl mit dem Elektromotor der ersten Motor-Pumpe-Gruppe als auch mit dem Elektromotor der zweiten Motor-Pumpe-Gruppe elektrisch unmittelbar verbunden und ist eingerichtet, zugleich beide Motor-Pumpe-Gruppen anzusteuern. Mit Vorteil werden die beiden Motor-Pumpe-Gruppen ausschließlich und vollständig über die gemeinsame Elektronikeinheit angesteuert und/oder von dieser mit elektrischer Energie versorgt, so dass die Motor-Pumpe-Gruppen neben der elektrischen Verbindung zu der gemeinsamen Elektronikeinheit keine weiteren elektrischen Anschlüsse aufweisen. Weiterhin weist die gemeinsame Elektronikeinheit bzw. das Elektronikgehäuse bevorzugt genau einen Steueranschluss, beispielsweise für einen CAN-Bus, der auch einen Versorgungsspannungsanschluss beinhalten kann, und genau einen Leistungsanschluss, beispielsweise für 48V, welcher auch als Hochvoltanschluss für beispielsweise 400V oder 800V ausgeführt sein kann, auf, welche besonders bevorzugt jeweils unmittelbar an dem Teilgehäuse der Elektronikeinheit angeordnet sind. Entsprechend muss beispielsweise nur genau eine Elektronikeinheit pro Achse angeschlossen werden.

Alternativ kann die Elektronikeinheit beispielsweise in zwei Untereinheiten für jeweils die beiden Motor-Pumpe-Gruppen unterteilt sein, welche beispielsweise in dem Teilgehäuse der Elektronikeinheit zueinander räumlich beabstandet angeordnet sind. In diesem Fall kann die Elektronikeinheit bzw. das Elektronikgehäuse genau zwei oder mehr Steueranschlüssen und Leistungsanschlüsse aufweisen.

Bevorzugt liegt weiterhin die maximale (Dauer-)Leistung der Elektromotoren der beiden Motor-Pumpe-Gruppen im Bereich zwischen 0,1 und 5 kW und beträgt beispielsweise 0,1, 0,2, 0,5, 1, 1,5, 2, 2,5, 3, 4 oder 5 kW, wobei jeder der genannten Werte auch eine Ober- oder Untergrenze des genannten Wertebereichs darstellen kann. Weiterhin liegt der Betriebsdruck im unbelasteten Zustand vorzugsweise zwischen 5 und 25 bar, wobei im Betrieb Spitzenwerte von über 200 bar auftreten können. Dabei liegt die Fördermenge des Hydraulikfluids vorzugsweise im Bereich zwischen 15 und 30 1/min bei Druckdifferenzen an beispielsweise zwei Leitungsanschlüssen einer Pumpe der Motor-Pumpe-Gruppen bis zu 30 bar. Insbesondere bei höheren Druckdifferenzen ist der Volumenstrom auch abhängig von der Leistung bzw. Baugröße der Motor-Pumpe-Gruppe. Mit einem Elektromotor mit einer Leistung zwischen 3 und 5 kW beträgt der Volumenstrom typischerweise bis zu 10 1/min bei einer Druckdifferenz im Bereich zwischen 100 und 150 bar. Die Drehzahlen des Elektromotors und damit auch der hydraulischen Pumpe sind dabei proportional zum Volumenstrom. Die maximalen Drehzahlen liegen typischerweise im Bereich zwischen 5.000 und 10.000 U/min.

Bevorzugt sind die Elektromotoren der beiden Motor-Pumpe-Gruppen vierquadrantenfähig bzw. als Elektromotorgenerator ausgebildet. Dies gestattet einen wechselweisen bzw. abwechselnden Betrieb als elektrischer Antrieb und/oder als elektrischer Generator (Rekuperationsbetrieb), womit beispielsweise in Folge eines Druckstoßes an der Pumpe (beispielsweise in Folge eines mechanischen Stoßes auf einen Stoßdämpfer) hydraulische Energie über die Pumpe aus dem Stoßdämpfer bzw. dem Fahrwerksystem als elektrische Energie zurückgewonnen werden kann.

Die erste und/oder zweite hydraulische Pumpe ist dabei vorzugsweise eine Innenzahnradpumpe, da diese eine geringe Massenträgheit und eine hohe Volumeneffizienz aufweist und somit einen hoch-dynamischen Wechselbetrieb mit minimaler Hysterese und minimalen Energieverlusten gestattet. Ein Wechsel zwischen Generator- und Motorbetrieb und umgekehrt ist dabei bevorzugt mit einer zeitlichen Auflösung beispielsweise bis zu 50 Hz möglich und auch die Ansteuereinheit ist dazu geeignet ausgebildet. Insbesondere sind die Motor-Pumpe-Einheiten bevorzugt geeignet, zusammen mit dem Dämpfer sowohl im Bereich der Fahrzeugaufbaufrequenz, üblicherweise bis zu 5 Hz, als auch im Bereich der Radfrequenz, üblicherweise bis zu 50 Hz, zu operieren. Innenzahnradpumpen sind beispielsweise aus DE 10 2014 103 958 A1 oder DE 10 2014 103 959 A1 bekannt, deren diesbezüglicher Offenbarungsgehalt in die vorliegende Schrift mit aufgenommen wird.

In einer bevorzugten Ausgestaltung der Vorrichtung bzw. des Achssatzes liegen die Antriebs- bzw. Längsachsen beider Motor-Pumpe-Gruppen und deren jeweilige Motor-Pumpe-Gehäuse auf einer gemeinsamen Achse, die eine Längsachse bzw. gemeinsame Längsachse der erfindungsgemäßen Vorrichtung bzw. des Achssatzes bildet, was im Folgenden auch als axiale Anordnung bezeichnet wird. Dabei sind die Pumpen und gegebenenfalls die Pumpendeckel jeweils auf voneinander wegweisenden Seiten der jeweiligen Motor-Pumpe-Gruppen bzw. Motor-Pumpe-Gehäuse bzw. des Achssatzes angeordnet, so dass die Elektromotoren zwischen den Pumpen der Motor-Pumpe-Gruppen angeordnet sind. Entsprechend weist die erfindungsgemäße Vorrichtung vorliegend einen längsgestreckten Aufbau auf mit einer Gesamtlänge (gemessen beispielsweise zwischen den Pumpendeckeln bzw. zwischen außenliegenden Stirnflächen der beiden Pumpen) entlang der gemeinsamen Längsachse im Bereich zwischen 20 und 90 cm, die beispielsweise 20, 30, 40, 50, 60, 70, 80 oder 90 cm beträgt, wobei jeder der genannten Werte auch eine Ober- oder Untergrenze des genannten Wertebereichs bilden kann. Eine derartige axiale Anordnung minimiert den Abstand zwischen den Pumpen und den jeweiligen Stoßdämpfern und damit die Länge der entsprechenden Druckleitungen, was die Bauteilkosten senkt und leitungsbedingte, fluid-dynamische Effekte minimiert.

In einer derartigen axialen Anordnung überspannt das Elektronik-Gehäuse bevorzugt die Vorrichtung im Wesentlichen oder genau in seiner gesamten Länge, wodurch die Größe der Öffnung in dem Elektronik-Gehäuse maximiert wird, was eine leichte Zugänglichkeit zu der Elektronikeinheit gewährleistet.

In einer alternativen, bevorzugten Ausgestaltung liegen die Längsachsen der beiden Motor-Pumpe-Gruppen und deren jeweilige Motor-Pumpe-Gehäuse parallel zueinander (und fallen nicht zusammen) und/oder die Motor-Pumpe-Gruppen weisen die gleiche Orientierung auf, bevorzugt derart, dass die Motor-Pumpe-Gehäuse beider Motor-Pumpe-Gruppen bündig angeordnet sind. Bei dieser parallelen Ausrichtung der Motor-Pumpe-Gruppen liegen entsprechend die pumpenseitigen Enden der Motor-Pumpe-Gehäuse der beiden Motor-Pumpe-Gruppen bzw. die jeweiligen Pumpendeckel in einer gemeinsamen Ebene, die senkrecht auf den Längsachsen der Motor-Pumpe-Gruppen steht, und die elektromotorseitigen Enden der Teilgehäuse der beiden Motor-Pumpe-Gruppen liegen in einer weiteren gemeinsamen Ebene, die ebenfalls senkrecht auf den Längsachsen der Motor-Pumpe-Gruppen steht.

Ein erfindungsgemäßes Fahrwerksystem bzw. eine erfindungsgemäße Fahrwerkachse für ein Fahrzeug umfasst zumindest einen ersten und zweiten hydraulisch aktiv steuerbaren Stoßdämpfer mit jeweils zwei beispielsweise durch einen beweglichen Dämpferkolben getrennten Dämpfer- bzw. Druckkammern, welche bevorzugt einer gemeinsamen Fahrwerkachse zugeordnet oder an dieser angeordnet sind, sowie eine wie oben beschriebene Vorrichtung zum Bereitstellen von hydraulischer Energie in einem Fahrwerksystem eines Fahrzeugs (Achssatz), wobei die Pumpe der ersten Motor-Pumpe-Gruppe die Druckkammern des ersten Stoßdämpfers hydraulisch miteinander verbindet und die Pumpe der zweiten Motor-Pumpe-Gruppe die Druckkammern des zweiten Stoßdämpfers hydraulisch miteinander verbindet. Dadurch kann beispielsweise eine "weiche" oder "harte" Dämpfung eingestellt werden, indem beispielsweise Druckstöße aus den Druckkammern durch die jeweilige Motor-Pumpe-Gruppe mehr oder weniger gedämpft bzw. gedrosselt werden. In diesem Fall wird somit die jeweilige Motor-Pumpe-Einheit hydraulisch angetrieben, so dass die Elektromotoren der Motor-Pumpe-Gruppen als Elektromotorgeneratoren betrieben werden können und somit elektrische Energie rückgewonnen werden kann (Rekuperation). Weiterhin kann auch die Null- bzw. Ruhelage des Stoßdämpfers aktiv bzw. gezielt eingestellt und auch während des Fahrbetriebs (laufend) verändert werden (aktives Fahrwerk). Dabei handelt es sich jeweils bevorzugt um ein geschlossenes hydraulisches System, in welchem beispielsweise kein druckloser Tank vorgesehen ist. Es versteht sich, dass das Fahrwerksystem eine oder mehrere weitere Achsen aufweisen kann, die jeweils mit einer weiteren erfindungsgemäßen Vorrichtung zur Steuerung der entsprechenden Stoßdämpfer ausgestattet sein können.

### KURZE BESCHREIBUNG DER ZEICHNUNGEN

Die Erfindung wird im Folgenden mit Bezug auf die beiliegenden Zeichnungen beschrieben. Die Zeichnungen sind lediglich schematische Darstellungen und die Erfindung ist nicht auf die speziellen, dargestellten Ausführungsbeispiele beschränkt.
- Fig. 1: zeigt eine perspektivische Ansicht eines ersten Ausführungsbeispiels eines erfindungsgemäßen Achssatzes im noch nicht zusammengebauten Zustand,
- Fig. 2: zeigt eine perspektivische Ansicht des ersten Ausführungsbeispiels eines erfindungsgemäßen Achssatzes im zusammengebauten, geschlossenen Zustand,
- Fig. 3: zeigt eine perspektivische Ansicht des ersten Ausführungsbeispiels eines erfindungsgemäßen Achssatzes im fertig montierten, abgedichteten Zustand,
- Fig. 4: zeigt eine schematische Ansicht des ersten Ausführungsbeispiels,
- Fig. 5: zeigt eine schematische Ansicht eines zweiten Ausführungsbeispiels,
- Fig. 6: zeigt eine schematische Ansicht eines dritten Ausführungsbeispiels, und
- Fig. 7: zeigt eine schematische Ansicht eines Fahrwerksystems mit einem erfindungsgemäßen Achssatz gemäß dem ersten Ausführungsbeispiel.

### DETAILLIERTE BESCHREIBUNG

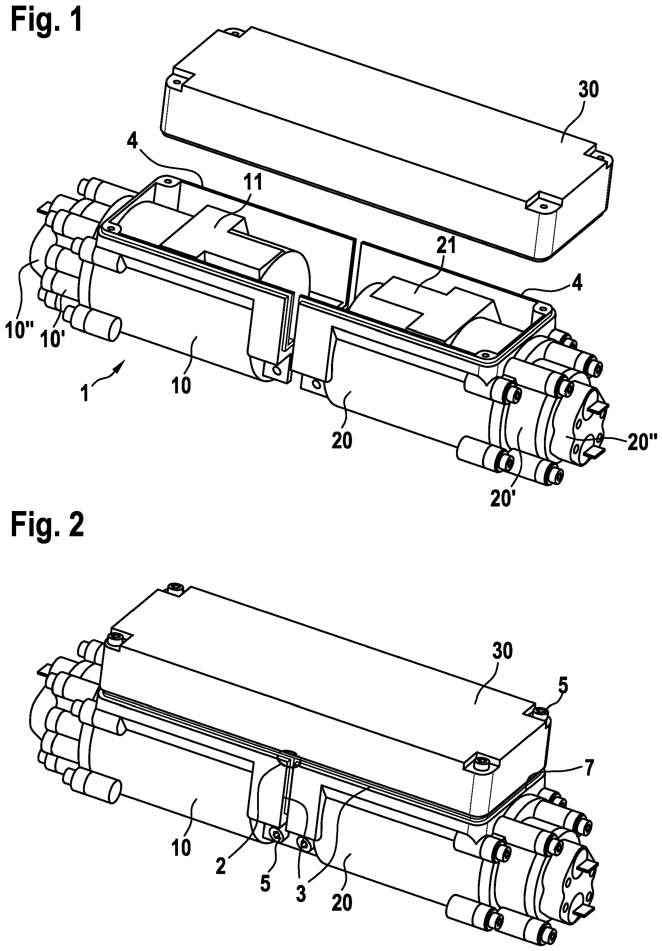

Die Figuren 1, 2 und 3 zeigen jeweils eine perspektivische Ansicht eines ersten Ausführungsbeispiels einer erfindungsgemäßen Vorrichtung in Form eines im Wesentlichen quaderförmigen Achssatzes 1, jeweils im noch nicht zusammengebauten Zustand, im zusammengebauten, geschlossenen Zustand und im fertig montierten, abgedichteten Zustand. Der Achssatz 1 besteht aus zwei Motor-Pumpe-Gruppen 11, 21, die in jeweiligen Gehäusen 10, 20 angeordnet sind, sowie aus einer (in den Figuren verdeckten) Elektronikeinheit 31, die vorliegend vollständig in dem von dem Elektronikgehäuse bzw. Elektronikdeckel 30 aufgespannten Innenraum angeordnet ist. Die jeweils baugleichen Motor-Pumpe-Gruppen 11, 21 sind im Wesentlichen innerhalb des von dem jeweiligen Motor-Pumpe-Gehäuse 10, 20 aufgespannten Innenraums angeordnet und somit eingebettet, wobei die jeweils endständig angeordneten Pumpen der Motor-Pumpe-Gruppen 11, 21 durch eine ebene, flache, stirnseitige Öffnung im Motor-Pumpe-Gehäuse 10, 20 über dieses hinausragen und dort durch angeflanschte Pumpendeckel 10', 10", 20', 20" dichtend abgedeckt sind. Dabei sind in dem dargestellten Ausführungsbeispiel die Motor-Pumpe-Gruppen 11, 21 vollständig innerhalb des durch die jeweiligen Motor-Pumpe-Gehäuse 10, 20 und die daran angeflanschten Pumpendeckel 10', 10", 20', 20" aufgespannten Innenraums angeordnet. Dabei dienen Motor-Pumpe-Gehäuse 10, 20 als Träger für die jeweilige Motor-Pumpe-Gruppe 11, 21, das heißt die Motor-Pumpe-Gruppen 11, 21 sind in den jeweiligen Motor-Pumpe-Gehäusen 10, 20 fest montiert bzw. vormontiert. Ebenso dient der Elektronikdeckel 30 als Träger für die Elektronikeinheit 31, die in dem vorliegenden Ausführungsbeispiel als gemeinsame Elektronikeinheit zur Ansteuerung beider Motor-Pumpe-Gruppen 11, 21 vorgesehen ist. Der Elektronikdeckel 30 weist entsprechend nur genau einen Steueranschluss und genau einen Leistungsversorgungsanschluss (die nicht gesondert dargestellt sind) auf.

In dem Achssatz 1 des ersten Ausführungsbeispiels ist vorgesehen, dass mit den beiden Motor-Pumpe-Gehäusen 10, 20 und dem Elektronikdeckel 30 genau drei Teilgehäuse jeweils wechselseitig aneinandergrenzen, so dass sich in dem geschlossenen Gesamtgehäuse (das aus den beiden Motor-Pumpe-Gehäusen 10, 20, dem Elektronikdeckel 30 und den Pumpendeckeln 10', 10", 20', 20" besteht) sich vorliegend an einem Verzweigungspunkt 2 in Form eines T-Stoßes verzweigenden Gehäusetrennlinien 3 zwischen den drei jeweils wechselseitig aneinandergrenzen Teilgehäusen 10, 20, 30 ergeben. Dabei weisen die beiden Motor-Pumpe-Gehäuse 10, 20, sowie der Elektronikdeckel 30, korrespondierende Stoßkanten 4 auf, entlang welcher jeweils zwei Gehäuse durchgängig aneinander stoßen.

Weiterhin bestehen zumindest die drei jeweils wechselseitig aneinandergrenzen Teilgehäuse 10, 20, 30 aus elektrisch leitendem Aluminium-Druckguss, so dass sich an den aneinander liegenden Stoßkanten 4, d. h. durchgängig entlang dieser Gehäusetrennlinien 3, eine durchgängig elektrisch leitende Verbindung zwischen den Teilgehäusen 10, 20, 30 ergibt. Dadurch wird eine effiziente elektromagnetische bzw. EMV-konforme Gehäuseabschirmung des Achssatzes 1 erzielt. Mit Vorteil bestehen sämtliche Teilgehäuse 10, 10', 10", 20, 20', 20", 30, also auch die Pumpendeckel 10', 10", 20', 20", des Achssatzes 1 aus elektrisch leitendem Aluminium-Druckguss und es besteht eine durchgehende, elektrisch leitende Verbindung zwischen sämtlichen Teilgehäusen 10, 10', 10", 20, 20', 20", 30.

Zum Zusammenfügen der drei jeweils wechselseitig aneinandergrenzenden Teilgehäuse 10, 20, 30 werden diese über Verschraubungen 5 (siehe Figur 2) fest miteinander verbunden. Anschließend werden die Gehäusetrennlinien 3 der drei jeweils wechselseitig aneinandergrenzenden Teilgehäuse 10, 20, 30 durchgängig mit einem Dichtklebstoff maschinell verklebt, indem auf die nun aneinander stoßenden Stoßkanten 4 von außen ein Dichtklebstoff 6 aufgetragen wird. Dabei ist entlang der jeweils aneinander stoßenden Stoßkanten 4 der drei jeweils wechselseitig aneinandergrenzenden Teilgehäuse 10, 20, 30 jeweils umlaufend eine verringerte Wandstärke der Teilgehäuse 10, 20, 30 vorgesehen, so dass sich im zusammengebauten, geschlossenen Zustand des Achssatzes 1 bzw. des Gesamtgehäuses eine Außennut 7 ergibt, in welche der Dichtklebstoff 6 eingefügt wird.

Vorliegend gestattet das Verwenden eines Dichtklebstoffs 6 (und auch das Vorsehen der Stoßkanten 4) und auch das Vorsehen von Verzweigungspunkten wie den vorliegenden T-Stößen 2, mehr Freiheitsgrade bei der Ausgestaltung der Teilgehäuse 10, 20, 30 und der resultierenden Gehäusetrennlinien 3. Vorliegend liegen die Stoßkanten 4 der beiden Motor-Pumpe-Gehäuse 10, 20 (an den Gehäusetrennlinien 3 der drei jeweils wechselseitig aneinandergrenzenden Teilgehäuse 10, 20, 30) in genau zwei, senkrecht aufeinander stehenden Ebenen, die entsprechend die Öffnungen zum Innenraum des Achssatzes 1 hin bilden. Dadurch müssen die beiden Motor-Pumpe-Gruppen 11, 21 beispielsweise nicht in einem einstückigen, wannenförmigen Gehäuse untergebracht werden, sondern können - vor dem Zusammenfügen - in zwei separaten Trägergehäusen 10, 20 eigenständig vormontiert werden. Entsprechend ergibt sich eine gute Zugänglichkeit auch zu den sich im montierten Achssatz 1 gegenüberliegenden Elektromotoren der jeweiligen Motor-Pumpe-Gruppen 11, 21, die jeweils auf den Pumpe-abgewandten Seiten der Motor-Pumpe-Gruppen 11, 21 angeordnet sind.

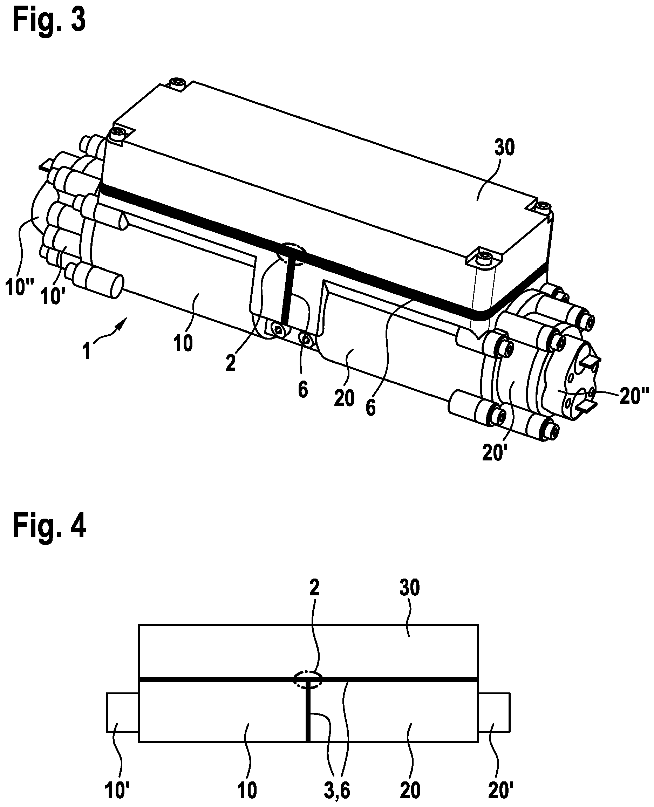

In dem in den Figuren 1 bis 3 dargestellten ersten Ausführungsbeispiel sind die beiden Motor-Pumpe-Gruppen 11, 21 auf einer gemeinsamen Längsachse angeordnet. Das heißt die jeweiligen nicht dargestellten, innenliegenden Antriebswellen, die in den Motor-Pumpe-Gruppen 11, 21 die Elektromotoren mechanisch mit den Pumpen verbinden und die Längsachse der jeweiligen Motor-Pumpe-Gruppe 11, 21 definieren, liegen auf einer gemeinsamen Achse. Dies ist schematisch nochmals in Figur 4 darstellt. In Figur 4 sind auch die mit dem Dichtklebstoff 6 verschlossenen Gehäusetrennlinien 4 zwischen den Motor-Pumpe-Gehäusen 10, 20 und dem Elektronikdeckel 30 durch verstärkte Striche angedeutet. Ebenso sind die auf den Motor-Pumpe-Gehäusen 10, 20 jeweils vorgesehenen Pumpendeckel 10', 10", 20', 20" nur schematisch als jeweils ein Pumpendeckel 10', 20' dargestellt.

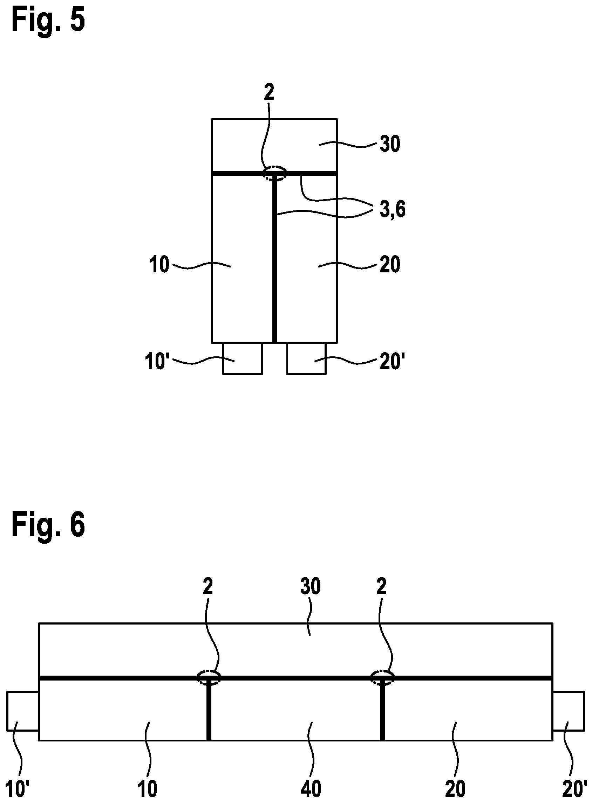

In einem zweiten Ausführungsbeispiel ist dagegen vorgesehen, dass die Motor-Pumpe-Gruppen 11, 21 mit jeweils parallel zueinander liegenden Längsachsen angeordnet werden, wie dies in Figur 5 schematisch dargestellt ist. Dabei sind die Pumpen bzw. Pumpendeckel 10', 20' der jeweiligen Motor-Pumpe-Gruppen 11, 21 in den jeweiligen Motor-Pumpe-Gehäusen 10, 20 auf der gleichen Seite des weiterhin im Wesentlichen quaderförmigen Achssatzes 1 angeordnet. Dagegen deckt ein Elektronikdeckel 30 die nebeneinander liegenden, Pumpe-abgewandten Seiten der Motor-Pumpe-Gehäuse 10, 20 bzw. die Elektromotoren ab. Entsprechend ergeben sich - wie auch in dem ersten Ausführungsbeispiel - sich an einem T-Stoß 2 verzweigende Gehäusetrennlinien 3, die in Figur 5 wiederum durch erhöhte Strichstärken angedeutet sind. Dabei ergibt sich eine verbesserte Zugänglichkeit zu den in den jeweiligen Motor-Pumpe-Gehäusen 10, 20 montierten Elektromotoren der Motor-Pumpe-Gruppen 11, 21.

In Figur 6 ist ein drittes Ausführungsbeispiel des Achssatzes 1 schematisch dargestellt. Darin werden im Gegensatz zu dem ersten Ausführungsbeispiel nicht nur drei, sondern genau vier Teilgehäuse 10, 20, 30, 40 jeweils wechselseitig aneinandergrenzend angeordnet, wobei die sich dabei ergebenden Gehäusetrennlinien 3 wiederum mit einem Dichtklebstoff 6 verschlossen werden. In dem dritten Ausführungsbeispiel liegen - im Gegensatz zu dem ersten und zweiten Ausführungsbeispiele - nicht nur zwei T-Stöße bzw. Verzweigungspunkte 2 vor, sondern vier. Entsprechend kann beispielsweise der Abstand zwischen den beiden Motor-Pumpe-Gruppe 11, 21 bzw. zwischen den jeweiligen Motor-Pumpe-Gehäusen 10, 20 durch ein weiteres Teilgehäuse 40 (oder gegebenenfalls eine Vielzahl von weiteren Teilgehäusen) vergrößert werden und somit beispielsweise der Bauraum im Inneren des Achssatzes 1 vergrößert werden.

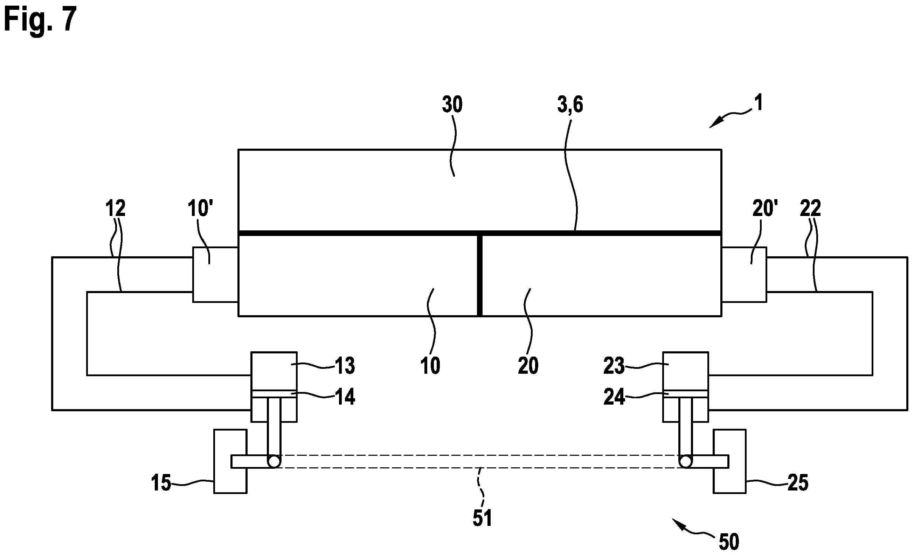

In Figur 7 ist ein Fahrwerksystem 50 mit einem erfindungsgemäßen Achssatz 1 gemäß dem ersten Ausführungsbeispiel schematisch dargestellt. Darin sind die jeweils von den Pumpen der Motor-Pumpe-Gruppen 11, 21 ausgehenden, jeweils zwei hydraulischen Leitungen 14, 24 mit den beiden Druckkammern jeweils eines Stoßdämpfers 13, 23 verbunden, welche im einfachsten Fall durch einen in einem Dämpferzylinder axial verfahrbaren Kolben 14, 24 getrennt sind. In dem dargestellten Ausführungsbeispiel sind die Zylinder der Stoßdämpfer 13, 23 mit der gefederten Masse des Fahrzeugs bzw. der Karosserie verbunden, während die Kolben 14, 24 mit der ungefederten Masse des Fahrzeugs bzw. jeweils einem Rad 15, 25 und gegebenenfalls, soweit vorhanden, auch mit einer Fahrwerkachse 51 verbunden bzw. gekoppelt sind. Dies kann jedoch auch umgekehrt ausgestaltet sein. Weiterhin wurde in der schematischen Darstellung von Fig. 7 auf üblicherweise zusätzlich vorgesehene Federelemente, beispielsweise ein Luft- und/oder Stahlfederelement, verzichtet.

### BEZUGSZEICHENLISTE

- 1: Achssatz, Vorrichtung
- 2: Verzweigungspunkt, T-Stoß
- 3: Gehäusetrennlinie
- 4: Stoßkante
- 5: Verschraubungen
- 6: Dichtklebstoff
- 7: Außennut

- 10, 20: Motor-Pumpe-Gehäuse
- 10', 10", 20', 20": Pumpendeckel
- 11, 21: Motor-Pumpe-Gruppe
- 12, 22: hydraulische Leitungen
- 13, 23: Stoßdämpfer
- 14, 24: Kolben
- 15, 25: Rad

- 30: Elektronikdeckel
- 31: Elektronikeinheit
- 40: weiteres Teilgehäuse

- 50: Fahrwerksystem
- 51: Fahrwerkachse

## Patentansprüche

1. Vorrichtung (1) zum Bereitstellen von hydraulischer Energie in einem Fahrwerksystem (50) eines Fahrzeugs, die Vorrichtung umfassend die folgenden Baugruppen:
- eine erste Motor-Pumpe-Gruppe (11), umfassend eine erste hydraulische Pumpe und einen ersten Elektromotor zum Antreiben der ersten hydraulischen Pumpe,
- eine zweite Motor-Pumpe-Gruppe (21), umfassend eine zweite hydraulische Pumpe und einen zweiten Elektromotor zum Antreiben der zweiten hydraulischen Pumpe, und
- eine Elektronikeinheit (31) zum Ansteuern der ersten und zweiten Motor-Pumpe-Gruppe, wobei die Baugruppen in einem Gesamtgehäuse (1), das aus wenigstens drei Teilgehäusen (10, 20, 30, 40) aufgebaut ist, angeordnet sind, **dadurch gekennzeichnet, dass** die drei Teilgehäuse jeweils wechselseitig aneinandergrenzen und zumindest oder genau dort mit einem Dichtklebstoff (6) verschlossen sind.

2. Vorrichtung (1) nach Anspruch 1, **dadurch gekennzeichnet, dass**
- das Gesamtgehäuse (1) bevorzugt eine zumindest im Wesentlichen quaderförmige Außenfläche aufweist, und/oder
- Gehäusetrennlinien (3), zwischen den wenigstens drei jeweils wechselseitig aneinandergrenzenden Teilgehäusen (10, 20, 30, 40),
- nicht entlang von Kanten des Gesamtgehäuses verlaufen und/oder
- Kanten des Gesamtgehäuses ausschließlich unter einem von Null verschiedenen Winkel, bevorzugt senkrecht schneiden.

3. Vorrichtung (1) nach Anspruch 1 oder 2, **dadurch gekennzeichnet, dass** die wenigstens drei jeweils wechselseitig aneinandergrenzenden Teilgehäuse (10, 20, 30, 40) jeweils korrespondierende Eingriffsbereiche, bevorzugt Stoßkanten (4) aufweisen,
- die entlang von Gehäusetrennlinien (3) des Gesamtgehäuses miteinander in Eingriff stehen, bevorzugt aneinander anstoßen, und/oder
- die den Rand der Teilgehäuse bilden.

4. Vorrichtung (1) nach einem der vorhergehenden Ansprüche, **dadurch gekennzeichnet, dass** in den wenigstens drei jeweils wechselseitig aneinandergrenzenden Teilgehäusen jeweils sämtliche Eingriffsbereiche bzw. Stoßkanten (4) in genau einer Ebene oder in genau zwei oder genau drei Ebenen liegen, die sich schneiden und bevorzugt jeweils aufeinander senkrecht stehen.

5. Vorrichtung (1) nach einem der vorhergehenden Ansprüche, **dadurch gekennzeichnet, dass** die Teilgehäuse eine geschlossene, bevorzugt einstückige oder einteilige Außenfläche oder Außenseite aufweisen und/oder elektrisch leitend sind und bevorzugt Aluminium-Guss umfassen oder daraus bestehen.

6. Vorrichtung (1) nach einem der vorhergehenden Ansprüche, **dadurch gekennzeichnet,**
**dass** die erste Motor-Pumpe-Gruppe (11) in einem ersten Teilgehäuse (10) der wenigstens drei jeweils wechselseitig aneinandergrenzenden Teilgehäuse angeordnet ist und eine Antriebswelle des ersten Elektromotors eine Längsachse der ersten Motor-Pumpe-Gruppe und des ersten Teilgehäuses definiert,
- wobei das erste Teilgehäuse einen zumindest im Wesentlichen U-förmigen Querschnitt aufweist und/oder die erste Motor-Pumpe-Gruppe an wenigstens oder genau drei Seiten durchgehend umgibt und/oder
- wobei die Eingriffsbereiche des ersten Teilgehäuses in genau zwei senkrecht aufeinander stehenden Ebenen verlaufen, und/oder
**dass** die zweite Motor-Pumpe-Gruppe (12) in einem zweiten Teilgehäuse (20) der wenigstens drei jeweils wechselseitig aneinandergrenzenden Teilgehäuse angeordnet ist und eine Antriebswelle des zweiten Elektromotors eine Längsachse der zweiten Motor-Pumpe-Gruppe und des zweiten Teilgehäuses definiert,
- wobei das zweite Teilgehäuse einen U-förmigen oder im Wesentlichen U-förmigen Querschnitt aufweist und/oder die zweite Motor-Pumpe-Gruppe an wenigstens oder genau drei Seiten durchgehend umgibt und/oder
- wobei die Eingriffsbereiche des zweiten Teilgehäuses in genau zwei senkrecht aufeinander stehenden Ebenen verlaufen.

7. Vorrichtung (1) nach einem der vorhergehenden Ansprüche, **dadurch gekennzeichnet, dass** die Elektronikeinheit (31) in einem dritten Teilgehäuse (30) der wenigstens drei jeweils wechselseitig aneinandergrenzenden Teilgehäuse angeordnet ist, das bevorzugt einen quaderförmigen Raum aufspannt und/oder einen U-förmigen Querschnitt aufweist.

8. Vorrichtung (1) nach einem der vorhergehenden Ansprüche, **dadurch gekennzeichnet, dass** entlang der bzw. auf den Gehäusetrennlinien (3) auf der Außenseite des Gesamtgehäuses (1) eine Vertiefung bzw. eine Nut zur Aufnahme des Dichtklebstoffs (6) vorgesehen ist.

9. Vorrichtung (1) nach einem der vorhergehenden Ansprüche, **dadurch gekennzeichnet, dass** die Elektronikeinheit (31) eine gemeinsame Elektronikeinheit für beide Motor-Pumpe-Gruppen (11, 21) ist.

10. Vorrichtung (1) nach einem der vorhergehenden Ansprüche,
- wobei die maximale Leistung der Elektromotoren der ersten und zweiten Motor-Pumpe-Gruppe (11, 21) jeweils im Bereich zwischen 0,1 und 5 kW liegt, und/oder
- wobei die Elektromotoren der ersten und zweiten Motor-Pumpe-Gruppe vierquadrantenfähig und/oder als Elektromotorgenerator ausgebildet sind, und/oder
- wobei die Pumpen der ersten und zweiten Motor-Pumpe-Gruppe als Innenzahnradpumpen ausgebildet sind.

11. Vorrichtung (1) nach einem der Ansprüche 1 bis 10, **dadurch gekennzeichnet,**
**dass** die Längsachsen der Teilgehäuse (10, 20) beider Motor-Pumpe-Gruppen (11, 21) auf einer gemeinsamen Achse liegen, die eine Längsachse der Vorrichtung bildet, und/oder
**dass** die Pumpen beider Motor-Pumpe-Gruppen jeweils voneinander weg weisen, und/oder dass die Vorrichtung eine Gesamtlänge im Bereich zwischen 20 und 90 cm aufweist.

12. Vorrichtung (1) nach einem der Ansprüche 1 bis 10, **dadurch gekennzeichnet,**
- **dass** die Längsachsen der Teilgehäuse (10, 20) beider Motor-Pumpe-Gruppen (11, 21) parallel zueinander liegen und/oder
- **dass** beide Motor-Pumpe-Gruppen die gleiche Orientierung aufweisen, wobei bevorzugt die Teilgehäuse beider Motor-Pumpe-Gruppen bündig angeordnet sind, und/oder
- **dass** das Teilgehäuse (30) der Elektronikeinheit (31) auf einer Pumpe-abgewandten Seite der Teilgehäuse der Motor-Pumpe-Gruppen angeordnet ist.

13. Fahrwerkachse (51) umfassend eine Vorrichtung (1) nach einem der Ansprüche 1 bis 12, wobei die Fahrwerkachse bevorzugt vormontiert ist und/oder zwei steuerbaren Stoßdämpfer (13, 23) aufweist, die besonders bevorzugt mit den Pumpen der Motor-Pumpe-Gruppen (11, 21) hydraulisch verbunden sind.

14. Fahrwerksystem (50) für ein Fahrzeug, umfassend zumindest einen ersten und zweiten hydraulisch steuerbaren Stoßdämpfer (13, 23), welche bevorzugt einer gemeinsamen Fahrwerkachse (51) zugeordnet oder an einer gemeinsamen Fahrwerkachse (51) angeordnet sind, sowie eine Vorrichtung (1) nach einem der Ansprüche 1 bis 12, wobei die erste Motor-Pumpe-Gruppe (11) Druckkammern des ersten Stoßdämpfers (13) hydraulisch verbindet und die zweite Motor-Pumpe-Gruppe (21) Druckkammern des zweiten Stoßdämpfers (23) hydraulisch verbindet und bevorzugt die Vorrichtung an der Fahrwerkachse (51) angeordnet ist.

## Claims

1. An apparatus (1) for supplying hydraulic energy in a chassis system (50) of a vehicle, the apparatus comprising the following construction groups:
- a first motor-pump group (11), comprising a first hydraulic pump and a first electric motor for driving the first hydraulic pump,
- a second motor-pump group (21), comprising a second hydraulic pump and a second electric motor for driving the second hydraulic pump, and
- an electronic unit (31) for controlling the first and second motor-pump groups, wherein the construction groups are arranged in an overall casing (1) that is constructed of at least three partial casings (10, 20, 30, 40), **characterized in that** the three partial casings respectively mutually adjoin each other and are closed with a sealing adhesive (6) at least or exactly there.

2. The apparatus (1) according to claim 1, **characterized in that**
- the overall casing (1) preferably has an at least substantially cuboid outer area, and/or
- casing separation lines (3) between the at least three respectively mutually adjoining partial casings (10, 20, 30, 40),
- do not extend along edges of the overall casing and/or
- edges of the overall casing intersect exclusively at an angle that is different from zero, preferably perpendicularly.

3. The apparatus (1) according to claim 1 or 2, **characterized in that** the at least three respectively mutually adjoining partial casings (10, 20, 30, 40) have respectively corresponding engagement regions, preferably abutment edges (4),
- which mutually engage along casing separation lines (3) of the overall casing, preferably abut on each other, and/or
- which form the boundary of the partial casings.

4. The apparatus (1) according to any of the preceding claims, **characterized in that** in the at least three respectively mutually adjoining partial casings respectively all engagement regions or abutment edges (4) are disposed in exactly one plane or in exactly two or exactly three planes, which intersect and are preferably disposed perpendicularly to each other.

5. The apparatus (1) according to any of the preceding claims, **characterized in that** the partial casings have a closed, preferably integral or single-piece outer area or exterior side and/or are electroconductive and preferably comprise cast aluminum or consist thereof.

6. The apparatus (1) according to any of the preceding claims, **characterized in that** the first motor-pump group (11) is arranged in a first partial casing (10) of the at least three respectively mutually adjoining partial casings and a drive shaft of the first electric motor defines a longitudinal axis of the first motor-pump group and of the first partial casing,
- wherein the first partial casing has an at least substantially U-shaped cross section and/or continuously surrounds the first motor-pump group on at least or exactly three sides and/or
- wherein the engagement regions of the first partial housing extend in exactly two
planes that are disposed perpendicularly to each other, and/or that the second motor-pump group (12) is arranged in a second partial casing (20) of the at least three respectively mutually adjoining partial casings and a drive shaft of the second electric motor defines a longitudinal axis of the second motor-pump group and of the second partial casing,
- wherein the second partial casing has a U-shaped or an at least substantially U-shaped cross section and/or continuously surrounds the second motor-pump group on at least or exactly three sides and/or
- wherein the engagement regions of the second partial housing extend in exactly two planes that are disposed perpendicularly to each other.

7. The apparatus (1) according to any of the preceding claims, **characterized in that** the electronic unit (31) is arranged in a third partial casing (30) of the at least three respectively mutually adjoining partial casings, which preferably spans a cuboid space and/or has a U-shaped cross section.

8. The apparatus (1) according to any of the preceding claims, **characterized in that** along or on the casing separation lines (3) on the exterior side of the overall casing (1) a depression or a groove is provided for receiving the sealing adhesive (6).

9. The apparatus (1) according to any of the preceding claims, **characterized in that** the electronic unit (31) is a common electronic unit for both motor-pump groups (11, 21).

10. The apparatus (1) according to any of the preceding claims,
- wherein the maximum power of the electric motors of the first and the second motor-pump group (11, 21) is respectively in the range between 0.1 and 5 kW, and/or
- wherein the electric motors of the first and the second motor-pump group are formed in a four-quadrant-capable manner and/or as electric motor generator, and/or
- wherein the pumps of the first and the second motor-pump group are formed as internal gear pumps.

11. The apparatus (1) according to any of claims 1 to 10, **characterized in that** the longitudinal axes of the partial casings (10, 20) of both motor-pump groups (11, 21) are disposed on a common axis, which forms a longitudinal axis of the apparatus, and/or that the pumps of both motor-pump groups respectively face away from each other, and/or that the apparatus has a total length in the range between 20 and 90 cm.

12. The apparatus (1) according to any of claims 1 to 10, **characterized in that**
- the longitudinal axes of the partial casings (10, 20) of both motor-pump groups (11, 21) are disposed mutually in parallel and/or
- both motor-pump groups have the same orientation, wherein preferably the partial casings of both motor-pump groups are arranged flush, and/or
- the partial casing (30) of the electronic unit (31) is arranged on a side of the partial housings of the motor-pump groups that faces away from the pump.

13. A chassis axle (51) comprising an apparatus (1) according to any of claims 1 to 12, wherein the chassis axle is preferably pre-mounted and/or has two actuatable shock absorbers (13, 23), which are particularly preferably hydraulically connected with the pumps of the motor-pump groups (11, 21).

14. A chassis system (50) for a vehicle, comprising at least a first and a second hydraulically actuatable shock absorber (13, 23), which are preferably allocated to a common chassis axle (51) or arranged on a common chassis axle (51), and an apparatus (1) according to any of claims 1 to 12, wherein the first motor-pump group (11) hydraulically connects pressure chambers of the first shock absorber (13) and the second motor-pump group (21) hydraulically connects pressure chambers of the second shock absorber (23) and the apparatus is preferably arranged on the chassis axle (51).

## Revendications

1. Dispositif (1) de fourniture d'énergie hydraulique dans un système de châssis (50) d'un véhicule, le dispositif comprenant les modules suivants :
- un premier groupe moto-pompe (11) comprenant une première pompe hydraulique et un premier moteur électrique pour l'entraînement de la première pompe hydraulique,
- un deuxième groupe moto-pompe (21) comprenant une deuxième pompe hydraulique et un deuxième moteur électrique pour l'entraînement de la deuxième pompe hydraulique, et
- une unité électronique (31) pour commander le premier et le deuxième groupe moto-pompe, cependant que les modules sont agencés dans un boîtier d'ensemble (1) constitué d'au moins trois boîtiers partiels (10, 20, 30, 40), **caractérisé en ce que**
les trois boîtiers partiels sont respectivement contigus entre eux et scellés au moins ou exactement là par une colle étanchéifiante (6).

2. Dispositif (1) selon la revendication 1, **caractérisé en ce que**
- le boîtier d'ensemble (1) présente de préférence une surface extérieure au moins essentiellement parallélépipédique, et/ou
- des lignes de séparation de boîtier (3) entre lesquelles au moins trois boîtiers partiels (10, 20, 30, 40) respectivement contigus entre eux
- ne s'étendent pas le long d'arêtes du boîtier d'ensemble et/ou
- des arêtes du boîtier d'ensemble se croisent exclusivement à un angle différent de zéro, de préférence perpendiculairement.

3. Dispositif (1) selon la revendication 1 ou 2, **caractérisé en ce que**
les au moins trois boîtiers partiels (10, 20, 30, 40) respectivement contigus entre eux présentent respectivement des zones correspondantes de prise, de préférence des arêtes de butée (4),
- qui sont en prise les unes avec les autres, de préférence viennent buter les unes contre les autres, le long de lignes de séparation de boîtier (3) du boîtier d'ensemble, et/ou
- constituent le bord des boîtiers partiels.

4. Dispositif (1) selon une des revendications précédentes, **caractérisé en ce que**,
dans les au moins trois boîtiers partiels respectivement contigus entre eux, respectivement toutes les zones de prise ou arêtes de butée (4) se trouvent dans exactement un plan ou dans exactement deux ou dans exactement trois plans qui se croisent et sont de préférence respectivement perpendiculaires entre eux.

5. Dispositif (1) selon une des revendications précédentes, **caractérisé en ce que** les boîtiers partiels présentent une surface extérieure ou face extérieure fermée, de préférence d'un seul tenant ou en une seule partie, et/ou sont électroconducteurs et comprennent de préférence de de la fonte d'aluminium ou en sont constitués.

6. Dispositif (1) selon une des revendications précédentes, **caractérisé en ce que** le premier groupe moto-pompe (11) est agencé dans un premier boîtier partiel (10) des au moins trois boîtiers partiels respectivement contigus entre eux, et un arbre d'entraînement du premier moteur électrique définit un axe longitudinal du premier groupe moto-pompe et du premier boîtier partiel,
- cependant que le premier boîtier partiel présente une section transversale au moins essentiellement en U, et/ou entoure en continu le premier groupe moto-pompe au moins sur ou exactement sur trois côtés, et/ou
- cependant que les zones de prise du premier boîtier partiel s'étendent sur exactement deux plans perpendiculaires entre eux, et/ou
**que** le deuxième groupe moto-pompe (12) est agencé dans un deuxième boîtier partiel (20) des au moins trois boîtiers partiels respectivement contigus entre eux, et un arbre d'entraînement du deuxième moteur électrique définit un axe longitudinal du deuxième groupe moto-pompe et du deuxième boîtier partiel,
- cependant que le deuxième boîtier partiel présente une section transversale en U ou essentiellement en U, et/ou entoure en continu le deuxième groupe moto-pompe au moins sur ou exactement sur trois côtés, et/ou
- cependant que les zones de prise du deuxième boîtier partiel s'étendent sur exactement deux plans perpendiculaires entre eux.

7. Dispositif (1) selon une des revendications précédentes, **caractérisé en ce que** l'unité électronique (31) est agencée dans un troisième boîtier partiel (30) des au moins trois boîtiers partiels respectivement contigus entre eux, lequel déploie de préférence un espace parallélépipédique et/ou présente une section transversale en U.

8. Dispositif (1) selon une des revendications précédentes, **caractérisé en ce que**,
le long des ou sur les lignes de séparation de boîtier (3) sur la face extérieure du boîtier d'ensemble (1), un renfoncement ou une rainure est prévu(e) pour la réception de la colle étanchéifiante (6).

9. Dispositif (1) selon une des revendications précédentes, **caractérisé en ce que** l'unité électronique (31) est une unité électronique commune aux deux groupes moto-pompe (11, 21).

10. Dispositif (1) selon une des revendications précédentes,
- cependant que la puissance maximale des moteurs électriques du premier et du deuxième groupe moto-pompe (11, 21) est respectivement comprise entre 0,1 et 5 kW, et/ou
- cependant que les moteurs électriques du premier et du deuxième groupe moto-pompe sont réalisés de manière appropriée au fonctionnement à quatre quadrants et/ou sous forme de générateur de moteur électrique, et/ou
- cependant que les pompes du premier et du deuxième groupe moto-pompe sont réalisées sous forme de pompes à engrenage interne.

11. Dispositif (1) selon une des revendications de 1 à 10, **caractérisé en ce que** les axes longitudinaux des boîtiers partiels (10, 20) des deux groupes moto-pompe (11, 21) se trouvent sur un axe commun qui constitue un axe longitudinal du dispositif, et/ou que les pompes des deux groupes moto-pompe sont tournées respectivement à l'opposé l'une de l'autre, et/ou
**que** le dispositif a une longueur totale comprise entre 20 et 90 cm.

12. Dispositif (1) selon une des revendications de 1 à 10, **caractérisé en ce**
- **que** les axes longitudinaux des boîtiers partiels (10, 20) des deux groupes moto-pompe (11, 21) sont parallèles entre eux , et/ou
- **que** les deux groupes moto-pompe présentent la même orientation, cependant que, de préférence, les boîtiers partiels des deux groupes moto-pompe sont agencés de manière alignée, et/ou
- **que** le boîtier partiel (30) de l'unité électronique (31) est agencé sur un côté, tourné à l'opposé de la pompe, des boîtiers partiels des groupes moto-pompe.

13. Axe de châssis (51) comprenant un dispositif (1) selon une des revendications de 1 à 12, cependant que l'axe de châssis est de préférence prémonté et/ou comporte deux amortisseurs (13, 23) commandables qui, particulièrement préférence, sont reliés hydrauliquement aux pompes des groupes moto-pompe (11, 21).

14. Système de châssis (50) d'un véhicule, comprenant au moins un premier et un deuxième amortisseur (13, 23) commandables hydrauliquement qui sont de préférence affectés à un axe commun de châssis (51) ou agencés à un axe commun de châssis (51), ainsi qu'un dispositif (1) selon une des revendications de 1 à 12, cependant que le premier groupe moto-pompe (11) relie hydrauliquement des chambres de pression du premier amortisseur (13) et le deuxième groupe moto-pompe (21) relie hydrauliquement des chambres de pression du deuxième amortisseur (23) et, de préférence, le dispositif est agencé à l'axe de châssis (51).
